# DEMANDE DE BREVET EUROPEEN

(11) **EP 1 357 413 A2**
(43) Date de publication de la demande: **29.10.2003**
(21) Numéro de dépôt: 03290594.5
(22) Date de dépôt: 11.03.2003
(51) Int. Cl.: G02B 6/44

(54) **Câble optique à accessibilité aisée**

(30) Priorité: 12.03.2002 FR 0203088
(71) Demandeur: Acome Société Cooperative De Travailleurs, 75008 Paris (FR)
(72) Inventeur: Jammes, Olivier, 50140 Notre Dame du Touchet (FR); Rault, Sébastien, 50600 Saint Hilaire du Harcoue (FR); Auvray, Patrick, 50140 Le Neufbourg (FR); Guerin, Jean-Yves, 14350 Beny Bocage (FR); Rochefort, Jean-Luc, 50600 Parigny (FR)
(74) Mandataire: Callon de Lamarck, Jean-Robert

(57) **Abrégé**

L'invention concerne un élément de câble optique (100) comprenant un tube de protection (20) cylindrique dans lequel s'étendent des éléments optiques (40) de transmission, caractérisé en ce que le tube de protection (20) présente au moins deux zones (32, 34) de moindre résistance mécanique qui s'étendent au moins en partie dans sa longueur, l'une de ces zones (34) présentant une résistance moins importante que l'autre (32).

## Description

L'invention concerne le domaine des câbles optiques.

Les câbles optiques comprennent généralement au moins une gaine extérieure entourant au moins un tube de protection dans lequel s'étendent des éléments optiques de transmission (fibres éventuellement rassemblées en rubans ou en modules ou dans des tubes rigides de plus petit diamètre).

Il doit bien entendu être possible d'accéder aux éléments optiques contenus dans ces câbles. En particulier, lorsque ces câbles sont installés dans des réseaux de télécommunication, certains éléments optiques doivent pouvoir être isolés pour être raccordés à d'autres éléments optiques afin de réaliser des dérivations. Les éléments optiques doivent également être accessibles à des opérateurs pour leur permettre de rechercher des anomalies.

Pour accéder localement à ces éléments optiques, les gaines extérieures du câble et le tube de protection doivent être ouverts. A cet effet, les opérateurs utilisent des outils coupants permettant d'inciser les différentes gaines.

L'incision du tube de protection est l'opération la plus délicate et il est nécessaire d'utiliser un outil spécifique pour ne pas risquer d'endommager des éléments optiques contenus dans le tube.

Il existe des structures de câbles optiques permettant d'éviter l'utilisation de tels outils pour limiter les risques d'endommagement des éléments optiques.

Par exemple, le document EP 1 006 384 publié le 07 juin 2000 décrit un câble optique dans lequel le tube de protection est réalisé en un matériau translucide et souple de type polyéthylène de densité moyenne. Le tube présente des zones longitudinales de moindre résistance. Du fait de la tranlucidité du matériau, l'opérateur visualise aisément les zones longitudinales. Dans ce type de câble, l'opérateur pince et arrache une portion de bande de polyéthylène formée entre les zones longitudinales.

Cette solution est particulièrement adaptée dans le cas où le tube de protection est formé d'un matériau translucide et mou.

Néanmoins, il est parfois nécessaire dans certains câbles d'utiliser des tubes constitués de matériau rigide et à faible post-retrait qui permettent de protéger plus efficacement les éléments optiques des contraintes extérieures (traction, pression, chocs, écrasement, etc.).

Un but général de l'invention est de fournir un câble optique dans lequel l'ouverture du tube de protection peut être réalisée sans outil spécifique.

A cet effet, l'invention propose un élément de câble optique comprenant un tube de protection cylindrique, le tube de protection dans lequel s'étendent des éléments optiques de transmission, caractérisé en ce que le tube de protection présente au moins deux zones de moindre résistance mécanique qui s'étendent au moins en partie dans sa longueur, l'une de ces zones présentant une résistance moins importante que l'autre.

Cette caractéristique crée une dissymétrie de la section du tube qui a pour effet, lorsque le tube est soumis à une torsion, d'entraîner en premier la rupture du tube dans son épaisseur au niveau de la zone longitudinale la moins résistante.

La zone longitudinale la plus résistante constitue alors une charnière permettant par basculement, le dégagement d'une portion du tube.

On notera que la solution proposée pour l'invention est parfaitement adaptée aux tubes rigides (module d'élasticité supérieur à 200 MPa à 20°C). La structure proposée pourrait toutefois également être utilisée dans le cas de tubes en des matériaux plus mous.

Les tubes utilisés dans l'invention peuvent être constitués d'un matériau translucide ou non, renforcé ou non.

Dans une mise en oeuvre de l'invention, le tube de protection comprend au moins deux zones d'épaisseur réduite, l'une des zones présentant une épaisseur de matière plus importante que l'autre zone.

Le tube de protection peut présenter au moins deux rainures longitudinales, l'une desdites rainures étant plus profonde que l'autre.

Ces rainures constituent des zones de moindre résistance qui causent la rupture du tube dans son épaisseur lorsque celui-ci est soumis à une torsion.

Dans une mise en oeuvre préférée de l'invention, les rainures sont ménagées sur la surface intérieure du tube de protection, l'une des rainures étant plus profonde que l'autre.

Le tube de protection peut également présenter sur sa surface extérieure des rainures longitudinales externes, chacune desdites rainures longitudinales externes étant positionnée en regard d'une rainure interne par rapport à l'épaisseur de la paroi du tube de protection.

Les rainures externes permettent avantageusement à un opérateur de repérer facilement la position des rainures internes.

La formation de rainures externes permet en outre de maîtriser l'épaisseur de matière entre une rainure interne et la rainure externe positionnée en regard.

L'invention propose également un procédé d'ouverture locale d'un câble optique comprenant un élément ainsi que précédemment défini, caractérisé en ce qu'on applique au tube au moins une torsion qui provoque la rupture locale du tube dans la zone la moins résistante, suivie d'une flexion qui provoque l'ouverture du tube et le dégagement d'une portion de tube située entre les deux zones de moindre résistance, et on tire la portion de tube ainsi dégagée pour entraîner la rupture locale du tube au niveau d'une autre zone de moindre résistance.

Ce procédé est particulièrement simple et ne nécessite pas l'utilisation d'outil tranchant lors de l'ouverture du tube de protection. Il peut donc être répété à intervalles réguliers le long du câble lorsqu'on souhaite réaliser une série de dérivations.

D'autres caractéristiques et avantages ressortiront encore de la description qui suit, laquelle est purement illustrative et non limitative et doit être lue en regard des figures annexées parmi lesquelles ;
- la figure 1 est une représentation schématique d'une structure de câble conforme à un mode de réalisation de l'invention,
- les figures 2 à 4 sont des schémas représentatifs des différentes étapes d'ouverture du tube de protection du câble de la figure 1.

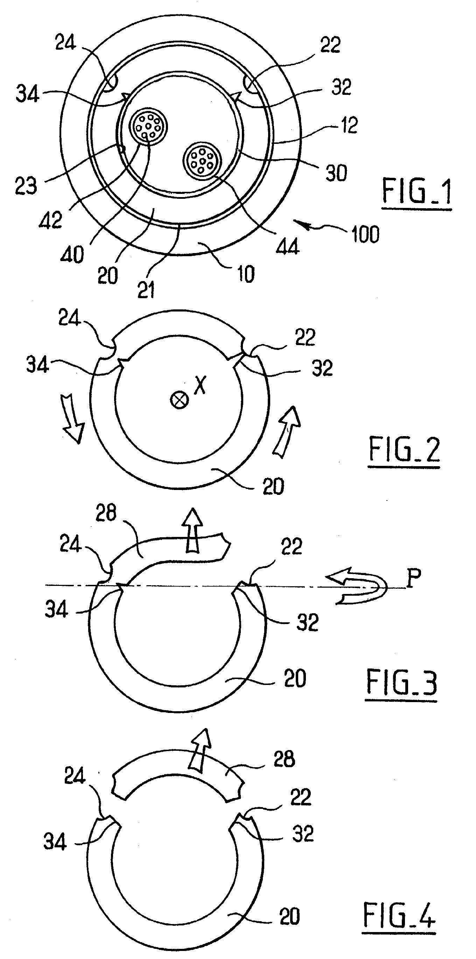

Sur la figure 1, le câble optique 100 comprend une gaine extérieure 10 entourant un tube de protection 20 renfermant des modules optiques 42 et 44. Chaque module optique 42 et 44 est constitué d'un faisceau de fibres 40 entouré d'une enveloppe. De manière classique, les modules optiques 42 et 44 sont entourés d'une enveloppe 30 d'étanchéité constituée par exemple d'un ruban hydrogonflant. Le câble optique comprend également une couche 12 d'éléments porteurs positionnée entre la gaine extérieure 10 et le tube de protection 20. Ces éléments porteurs sont destinés à supporter les contraintes de traction dans le câble 100, ils sont constitués par exemple de fibres d'aramide ou de verre rapportées sur le tube 20.

Dans un mode de réalisation préféré, le tube de protection 20 est constitué de polychlorure de vinyle (PVC) ou de polychlorure de vinyle surchloré (PVC-C). Il présente un diamètre extérieur d'environ 9 mm et un diamètre intérieur d'environ 6,6 mm. Ce tube 20 comprend sur sa surface intérieure 23 deux rainures internes 32 et 34 longitudinales présentant une section en V. La rainure 32 est plus profonde que la rainure 34.

Le tube de protection 20 comprend en outre sur sa surface extérieure 21 deux rainures externes 22 et 24 longitudinales identiques entre elles et présentant une section arrondie. Chaque rainure externe 22, 24 est localisée en regard respectivement d'une rainure interne 32, 34 par rapport à la paroi du tube 20.

Chaque couple 22, 32 et 24, 34 de rainures interne et externe positionnées en regard l'une de l'autre et de part et d'autre de la paroi du tube 20 crée dans la longueur de ce tube une zone d'épaisseur réduite. Quelque soit le matériau constitutif du tube 20, l'épaisseur de matière entre les rainures 22 et 32 et 24 et 34 est préférentiellement comprise entre 0,1 et 0,5 mm, l'épaisseur de matière entre les rainures 24 et 34 étant plus importante que l'épaisseur de matière entre les rainures 22 et 32. Cette épaisseur de matière dépend bien entendu de l'épaisseur du tube 20. Elle sera d'autant plus importante que l'épaisseur du tube 20 est importante. Dans le cas du tube en PVC donné en exemple, l'épaisseur de matière comprise entre les rainures 22 et 32 est d'environ 0,2 mm et l'épaisseur de matière comprise entre les rainures 24 et 34 est d'environ 0,3 mm. Chaque zone d'épaisseur réduite constitue une zone de moindre résistance permettant d'ouvrir le tube sans l'aide d'outil spécifique.

La figure 2 représente une première étape d'ouverture du tube de protection 20. Selon cette étape, l'opérateur applique au tube 20 une torsion autour de l'axe central X du tube 20 (indiquée par des flèches) à l'endroit du câble où il souhaite accéder aux fibres optiques. Cette torsion provoque la rupture de l'épaisseur de matière située entre la rainure externe 32 et la rainure interne 22.

La figure 3 représente une deuxième étape d'ouverture du tube de protection 20. Sur cette figure, le tube 20 a été déchiré au niveau des rainures 32 et 22. L'opérateur applique alors au tube 20 une flexion (indiquée par une flèche) sensiblement dans le plan P des rainures internes 22 et 24, la concavité de la flexion étant dirigée vers la rainure 24 la moins profonde. Cette flexion provoque le dégagement d'une portion 28 de tube 20 située entre les deux zones de moindre résistance.

Selon une troisième étape, l'opérateur tire sur la portion 28 de tube dégagée, ce qui provoque alors la rupture de l'épaisseur de matière située entre la rainure externe 34 et la rainure interne 24.

La figure 4 représente le tube 20 lorsqu'il a été déchiré au niveau des deux rainures internes 22 et 24. L'opérateur soulève et tire la portion de tube 28 située entre les deux rainures 22 et 24 et propage ainsi la rupture des rainures le long du tube 20 sur la distance souhaitée. La propagation de la rupture forme une bande de matière pouvant être ensuite découpée pour être détachée du tube 20.

De préférence, les rainures 22 et 24 ne sont pas diamétralement opposées. Elles sont suffisamment espacées pour créer une bande de matière 28 détachable permettant l'accès aux fibres optiques.

Elles sont néanmoins suffisamment rapprochées pour que le tube protecteur forme une « coquille » apte à protéger les fibres optiques qu'il contient lorsque la bande détachable a été supprimée. A cet effet, les rainures 22 et 24 sont positionnées en formant entre elles un angle compris entre 90 et 150 degrés, préférentiellement 120 degrés.

Dans la mise en oeuvre décrite précédemment, les rainures externes permettent à l'opérateur de visualiser l'emplacement des rainures internes.

Ces rainures externes permettent également d'ajuster avec précision l'épaisseur de matière située entre les rainures externes et les rainures internes.

Le tube peut également comporter sur sa paroi extérieure des indications ou un repérage permettant de localiser la zone de moindre résistance présentant la résistance la plus importante et la la zone de moindre résistance présentant la résistance la plus faible.

On pourra réaliser des lignes de marquage sur la paroi externe du tube en utilisant toute technique de marquage appropriée. Ces lignes de marquage peuvent par exemple être réalisées sous formes de reliefs positionnées de part et d'autre de l'une des rainures externes. Ces marquages sont avantageusement réalisés lors de l'extrusion du tube. L'opérateur peut ainsi distinguer la zone de moindre résistance présentant la résistance au déchirement la plus importante de la la zone de moindre résistance présentant la résistance au déchirement la plus faible. Cette caractéristique permet à l'opérateur d'en déduire le sens dans lequel doit être réalisée la flexion pour entraîner le dégagement de la portion de tube située entre les deux zones de moindre résistance.

## Revendications

1. Élément de câble optique (100) comprenant un tube de protection (20) cylindrique dans lequel s'étendent des éléments optiques (40) de transmission, **caractérisé en ce que** le tube de protection (20) présente au moins deux zones (32, 34) de moindre résistance mécanique qui s'étendent au moins en partie dans sa longueur, l'une de ces zones (34) présentant une résistance moins importante que l'autre (32).

2. Élément de câble selon la revendication 1, **caractérisé en ce que** le tube de protection (20) comprend au moins deux zones (22-32, 24-34) d'épaisseur réduite, l'une des zones (24-34) présentant une épaisseur de matière plus importante que l'autre zone (22-32).

3. Élément de câble selon l'une des revendications 1 ou 2, **caractérisé en ce que** le tube de protection (20) présente au moins deux rainures (32, 34) longitudinales, l'une desdites rainures (32) étant plus profonde que l'autre (34).

4. Élément de câble selon la revendication 3, **caractérisé en ce que** les rainures longitudinales (32, 34) présentent une section en V.

5. Élément de câble selon l'une des revendications 1 à 4, **caractérisé en ce que** le tube de protection (20) présente sur sa surface intérieure (23) deux rainures longitudinales internes (32, 34), l'une desdites rainures (32) interne étant plus profonde que l'autre (34).

6. Élément de câble selon la revendication 5, **caractérisé en ce que** le tube de protection (20) présente en outre sur sa surface extérieure (21) des rainures longitudinales (22, 24) externes, chacune desdites rainures longitudinales externes (22 ; 24) étant positionnée en regard d'une rainure interne (32 ; 34) par rapport à l'épaisseur de la paroi du tube (20) de protection.

7. Élément de câble selon la revendication 6, **caractérisé en ce que** les rainures longitudinales (22, 24) externes présentent une section arrondie.

8. Élément de câble selon l'une des revendications 1 à 7, **caractérisé en ce que** les zones de moindre résistance (22, 24) sont disposées sur le tube (20) en formant entre elles un angle compris entre 90 et 150 degrés, préférentiellement 120 degrés.

9. Elément de câble selon l'une des revendications 1 à 8, **caractérisé en ce que** le tube (20) est en un matériau présentant un module d'élasticité supérieur à 200 MPa à 20°C.

10. Elément de câble selon l'une des revendications 1 à 9, **caractérisé en ce qu'**il présente sur sa surface extérieure (21) des moyens pour le repérage de la zone (34) qui présente la résistance la plus importante et/ou pour le repérage de l'autre (32) des deux zones.

11. Elément de câble selon la revendication 10, **caractérisé en ce que** les moyens de repérage comprennent des repérages externes positionnés à proximité d'au moins une des zones de moindre résistance.

12. Élément de câble selon l'une des revendications qui précèdent, **caractérisé en ce que** les zones de moindre résistance présentant des épaisseurs comprises entre 0,1 et 0,5 mm.

13. Câble optique (100), **caractérisé en ce qu'**il comporte un élément (20) selon l'une des revendications précédentes et une gaine extérieure (10) dans laquelle il s'étend.

14. Procédé d'ouverture locale d'un câble optique (100) comprenant un élément (20) selon l'une des revendications 1 à 12, **caractérisé en ce qu'**on applique au tube (20) au moins une torsion qui provoque la rupture locale du tube (20) dans la zone la moins résistante (32), suivie d'une flexion qui provoque l'ouverture du tube et le dégagement d'une portion (28) de tube (20) située entre les deux zones de moindre résistance (32, 34), et on tire la portion de tube (28) ainsi dégagée pour entraîner la rupture locale du tube (20) au niveau d'une autre zone de moindre résistance (34).

15. Procédé selon la revendication 14, **caractérisé en ce qu'**on tire ensuite la portion de tube (28) dégagée par la rupture des deux zones de moindre résistance pour propager la rupture de ces zones le long du tube (20).
